Europäisches Patentamt

European Patent Office

Office européen des brevets

(19)

(11) Veröffentlichungsnummer: **0 218 775**
**B1**

(12) **EUROPÄISCHE PATENTSCHRIFT**

(45) Veröffentlichungstag der Patentschrift:
**19.04.89**

(51) Int. Cl.⁴: **F16F 15/12**

(21) Anmeldenummer: **86101922.2**

(22) Anmeldetag: **14.02.86**

(54) **Drehschwingungsdämpfer.**

(30) Priorität: **05.10.85 DE 3535619**

(43) Veröffentlichungstag der Anmeldung:
**22.04.87 Patentblatt 87/17**

(45) Bekanntmachung des Hinweises auf die Patenterteilung:
**19.04.89 Patentblatt 89/16**

(84) Benannte Vertragsstaaten:
**DE FR GB IT**

(56) Entgegenhaltungen:
**WO-A-85/05663**
**DE-A- 2 109 423**
**GB-A- 365 357**
**GB-A- 895 460**
**US-A- 3 990 324**

(73) Patentinhaber: **Firma Carl Freudenberg, Höhnerweg 4, D-6940 Weinheim/Bergstrasse(DE)**

(72) Erfinder: **Ullrich, Günter, Hagenstrasse 22, D-6944 Hemsbach(DE)**
Erfinder: **Triesethau, Karl Heinz, Auf der Höh 15, D-6101 Brensbach(DE)**

(74) Vertreter: **Weissenfeld-Richters, Helga, Dr., Höhnerweg 2, D-6940 Weinheim/Bergstrasse(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Drehschwingungsdämpfer, umfassend einen Innen- und einen Außenring, die einander in radialem Abstand umschließen und die durch wenigstens drei gleichmäßig auf dem Umfang verteilte Wälzkörper aufeinander abgestützt sind, wobei die Wälzkörper in dem durch den Abstand gebildeten Spalt angeordnet sind und wobei zusätzlich ein ringförmig ausgebildeter Federkörper aus polymerem Werkstoff zwischen dem Innen- und dem Außenring angeordnet ist.

Ein solcher Drehschwingungsdämpfer ist aus der DE-A 2 109 423 bekannt. Die Wälzkörper werden dabei durch Kugeln eines Kugellagers gebildet und dementsprechend in Laufbahnen des Innen- und des Außenringes geführt. Die Herstellung ist bereits aus diesem Grunde außerordentlich aufwendig und teuer. Sie erfordert darüber hinaus die Festlegung des Federkörpers an den sich in radialer Rich-tung erstreckenden Begrenzungsflächen des In-nen- und des Außenringes, was zumindest in bezug auf die vorliegend geforderte Dauerhaftigkeit der Verbindung äußerst schwierig ist.

In der WO-A 8 505 663 (Veröffentlichungsdatum: 19. 12. 85) wird ein Drehschwingungsdämpfer gezeigt, der einen Innenring und einen Außenring aufweist, die durch mehrere in Umfangsrichtung verteilte und zwischen den Ringen angeordnete, gummielastische Federelemente 20 verbunden sind. Diese weisen axial geöffnete Ausnehmungen auf, in die starre Wälzkörper mit radialer Vorspannung eingesetzt sind. Sowohl die Anbringung der Federelemente als auch diejenige der Wälzkörper ist schwierig.

Der Erfindung liegt die Aufgabe zugrunde, einen Drehschwingungsdämpfer der eingangs genannten Art mit dem Ziel einer vereinfachten Herstellbarkeit weiterzuentwickeln.

Diese Aufgabe wird erfindungsgemäß bei einem Drehschwingungsdämpfer der eingangs genannten Art dadurch gelöst, daß der Federkörper in dem Spalt angeordnet und mit axial geöffneten Ausnehmungen versehen ist und daß die Wälzkörper unter elastischer Aufweitung der Ausnehmungen in dieselben eingepreßt sind.

Der erfindungsgemäße Drehschwingungsdämpfer ist durch einen äußerst einfachen Aufbau gekennzeichnet und er ist dementsprechend einfach herstellbar. Zusätzliche Einrichtungen sind im allgemeinen nicht erforderlich.

Die Wälzkörper werden im einfachsten Falle durch Kugeln gebildet, die in die Ausnehmungen eingepreßt sind. Die Verwendung von säulenförmig ausgebildeten Körper ist jedoch ebenfalls möglich und begünstigt die Erzielung einer progressiven Dämpfungscharakteristik. Innen- und außenseitig sollen die Wälzkörper in jedem Falle durch Bestandteile einer durchgehend denkbaren Zylinderfläche begrenzt sein, um ein zumindest begrenztes Abrollen in Umfangsrichtung zu gewährleisten.

Eine weitere Steigerung des progressiven Dämpfungsverhaltens läßt sich erzielen, wenn die Wälzkörper wenigstens einseitig durch eine ebene Fläche begrenzt sind, die eine im wesentlichen radiale, achsparallele Erstreckung aufweist. Ein diesbezüglich optimales Ergebnis wird erzielt, wenn die Wälzkörper als im wesentlichen zylindrischen Rollen mit auf gegenüberliegenden Seiten des Umfangs vorgesehenen, parallelen Abflachungen ausgebildet sind, wobei sich die zu den Abflachungen parallele und die Rotationsachse des Wälzkörpers enthaltende Mittelebene in radialer Richtung erstreckt. Entsprechende Wälzkörper lassen sich außerdem auf eine besonders kostengünstige Weise erzeugen.

Die Wälzkörper bestehen im Regelfalle aus Metall. Die Verwendung von Hartkunststoffen zu ihrer Herstellung ist jedoch ebenfalls möglich und gewährleistet völlige Korrosionssicherheit.

Der Gegenstand der vorliegenden Erfindung wird nachfolgend anhand der in der Anlage beigefügten Zeichnung weiter erläutert. Es zeigen:

Figur 1 einen Drehschwingungsdämpfer in der Vorderansicht.

Figur 2 den Drehschwingungsdämpfer gemäß Figur 1 in halbgeschnittener Darstellung.

Figur 3 einen Ausschnitt aus einem Drehschwingungsdämpfer ähnlich der Ausführung nach Figur 1, bei dem die Wälzkörper in Umfangsrichtung durch einander gegenüberliegende, ebene Flächen begrenzt sind, die einen parallelen Verlauf zueinander und zu der Rotationsachse des Drehschwingungsdämpfers haben.

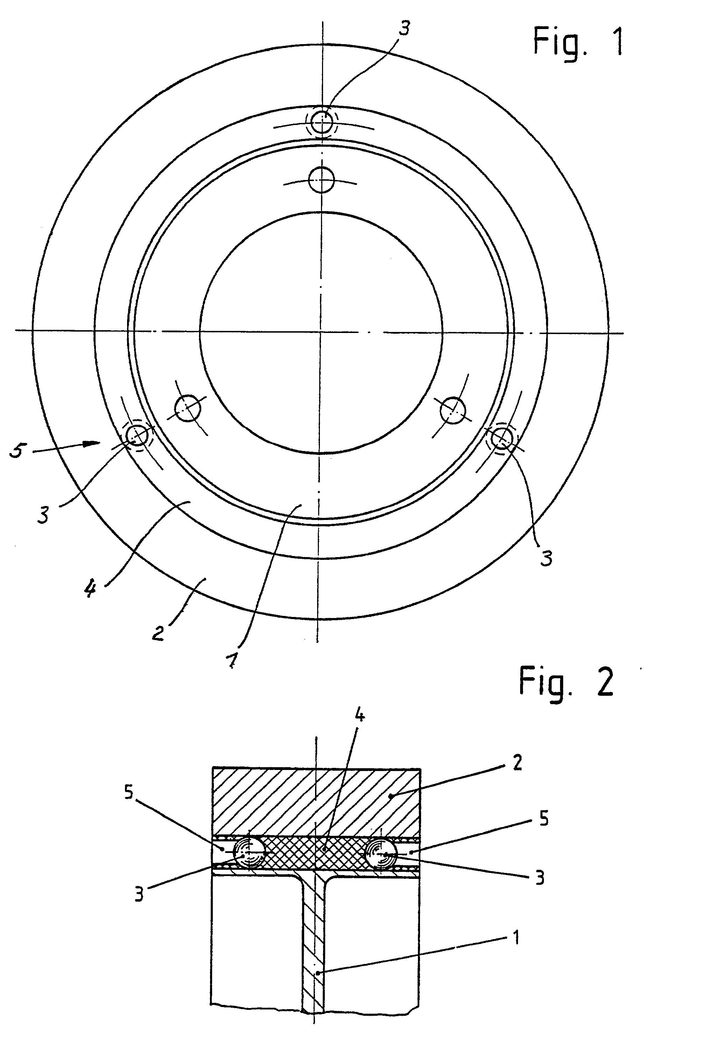

Der in den Figuren 1 und 2 gezeigte Drehschwingungsdämpfer besteht aus dem Innenring 1 und dem Außenring 2. Diese umschließen einander in radialer Richtung in einem Abstand, wobei der durch den Abstand gebildete Spalt mit dem Federkörper 4 ausgefüllt ist. Dieser besteht aus Gummi einer Härte-Shore A von 50, und ist durch Vulkanisation mit dem Innen- und dem Außenring verbunden. Varianten von 40 bis 70 Shore sind möglich.

Der Federkörper weist in beiden Stirnflächen drei gleichmäßig auf den Umfang verteilte Ausnehmungen 5 auf, die durch Sacklöcher gebildet werden. Diese sind von kreisförmigem Querschnitt und enthalten jeweils einen Wälzkörper 3 von kugelförmiger Gestalt. Die Wälzkörper sind durch die sich bei der Einpressung ergebene, elastische Aufweitung der Ausnehmungen festgelegt. Ein unbeabsichtigter Verlust ist daher nicht zu befürchten, die axiale Zuordnung zu dem Drehschwingungsdämpfer durch die Tiefe der Sacklöcher festgelegt.

Die Wälzkörper haben einen Durchmesser, der geringfügig kleiner ist als die radiale Spaltweite zwischen dem Innen- und dem Außenring. Eine präzise gegenseitige Zuordnung in radialer Richtung ist dadurch stets gewährleistet.

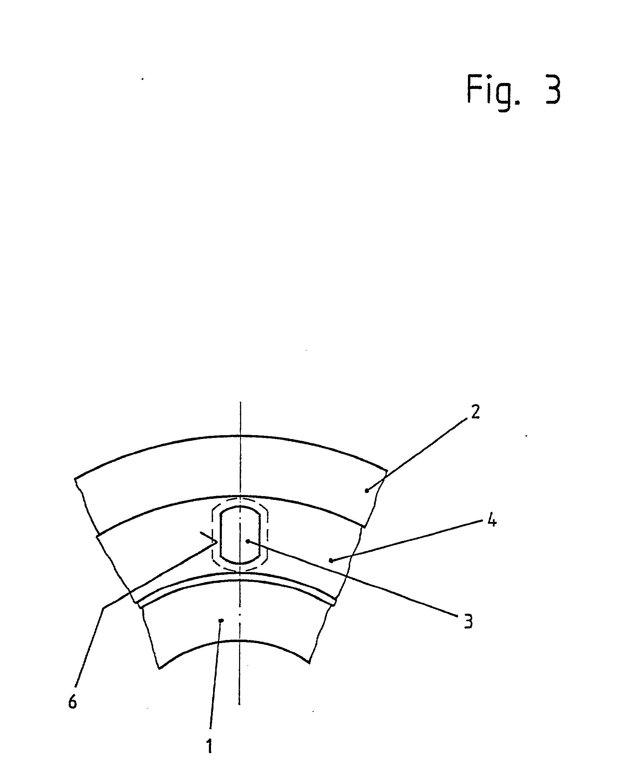

Figur 3 nimmt Bezug auf einen Ausschnitt eines Drehschwingungsdämpfers ähnlich der in Figur 1 gezeigten Variante. Durch diese soll die Gestalt einer abweichenden Ausführungen der Wälzkörper verdeutlicht werden, nämlich einer Ausführung, bei der die Wälzkörper 3 von säulenförmiger Gestalt sind. Sie werden innen- und außenseitig durch einander ergänzende Zylinderflächen begrenzt, in Umfangsrichtung hingegen durch ebene Flächen 6, die sich parallel zueinander und zu der Rotationsachse erstrecken. Bei einer Winkelverlagerung des Außenringes 2 in bezug auf den Innenring 1 resultiert durch diese spezielle Ausbildung der Wälzkörper 3 eine verstärkte Zusammenpressung des Materials des Federkörpers 4. Ein stark progressives Dämpfungsverhalten des Drehschwingungsdämpfers ist hiervon die Folge.

## Patentansprüche

1. Drehschwingungsdämpfer, umfassend einen Innen- und einen Außenring (1, 2), die einander in radialem Abstand umschließen und die durch wenigstens drei gleichmäßig auf dem Umfang verteilte Wälzkörper (3) aufeinander abgestützt sind, wobei die Wälzkörper (3) in dem durch den Abstand gebildeten Spalt angeordnet sind und wobei zusätzlich ein ringförmig ausgebildeter Federkörper (4) aus polymerem Werkstoff zwischen dem Innen- und dem Außenring (1, 2) vorgesehen ist, dadurch gekennzeichnet, daß der Federkörper (4) in dem Spalt angeordnet und mit axial geöffneten Ausnehmungen (5) versehen ist und daß die Wälzkörper (3) unter elastischer Aufweitung der Ausnehmungen (5) in dieselben eingepreßt sind.

2. Drehschwingungsdämpfer nach Anspruch 1, dadurch gekennzeichnet, daß der Federkörper (4) nach seiner Herstellung in den Spalt eingepreßt ist.

3. Drehschwingungsdämpfer nach Anspruch 1, dadurch gekennzeichnet, daß der Federkörper (4) durch Vulkanisation verfestigt und an den einander gegenüberliegenden Flächen des Innenringes (1) und des Außenringes (2) festgelegt ist.

4. Drehschwingungsdämpfer nach Anspruch 1 bis 3, dadurch gekennzeichnet, daß die Ausnehmungen (5) sacklochartig ausgebildet sind.

5. Drehschwingungsdämpfer nach Anspruch 1 bis 4, dadurch gekennzeichnet, daß Ausnehmungen (5) vorgesehen sind, die in entgegengesetzten Richtungen münden.

6. Drehschwingungsdämpfer nach Anspruch 1 bis 5, dadurch gekennzeichnet, daß die Wälzkörper (3) innen und außen durch Teile einer Zylinderfläche begrenzt sind.

7. Drehschwingungsdämpfer nach Anspruch 1 bis 6, dadurch gekennzeichnet, daß die Wälzkörper (3) wenigstens einseitig durch eine ebene Fläche (6) begrenzt sind, die eine im wesentlichen radiale, achsparallele Erstreckung aufweist.

8. Drehschwingungsdämpfer nach Anspruch 6, dadurch gekennzeichnet, daß die Wälzkörper als im wesentlichen zylindrische Rollen mit auf gegenüberliegenden Seiten des Umfangs vorgesehenen, parallelen Abflachungen (6) ausgebildet sind, wobei sich die zu den Abflachungen (6) parallele und die Rotationsachse des Wälzkörpers enthaltende Mittelebene (7) in radialer Richtung erstreckt.

9. Drehschwingungsdämpfer nach Anspruch 1 bis 8, dadurch gekennzeichnet, daß die Wälzkörper (3) aus einem Hartkunststoff bestehen.

## Claims

1. A torsional vibration damper, comprising an inner and an outer ring (1, 2), which enclose each other with radial clearance and which are supported on each other by at least three rolling bodies (3) evenly distributed on the circumference, the rolling bodies (3) being arranged in the gap formed by the clearance and, in addition, an annularly designed spring body (4) of polymeric material being provided between the inner and the outer ring (1, 2), characterized in that the spring body (4) is arranged in the gap and is provided with axially open recesses (5) and in that, with resilient widening of the recesses (5), the rolling bodies (3) are pressed into the same.

2. A torsional vibration damper according to claim 1, characterized in that, after its production, the spring body (4) is pressed into the gap.

3. A torsional vibration damper according to claim 1, characterized in that the spring body (4) is set by vulcanization and is fixed on the opposite surfaces of the inner ring (1) and of the outer ring (2).

4. A torsional vibration damper according to any of claims 1 to 3, characterized in that the recesses (5) are designed in the manner of blind holes.

5. A torsional vibration damper according to any of claims 1 to 4, characterized in that recesses (5) are provided, which open out in opposite directions.

6. A torsional vibration damper according to any of claims 1 to 5, characterized in that the rolling bodies (3) are bounded on inside and outside by parts of a cylindrical surface.

7. A torsional vibration damper according to any of claims 1 to 6, characterised in that the rolling bodies (3) are bounded at least on one side by a flat surface (6) which has a substantially radial, axially parallel extent.

8. A torsional vibration damper according to claim 6, characterized in that the rolling bodies are designed as substantially cylindrical rollers having parallel flattened portions (6) provided on opposite sides of the circumference, the centre plane (7), parallel to the flattened portions (6) and containing the axis of rotation of the rolling body, extending in radial direction.

9. A torsional vibration damper according to any of claims 1 to 8, characterized in that the rolling bodies (3) are composed of a hard plastics.

## Revendications

1. Amortisseur d'oscillations de rotation comprenant une bague intérieure et une bague extérieure (1, 2) concentriques l'une par rapport à l'autre et à une certaine distance radiale l'une de l'autre et qui sont supportées l'une sur l'autre, par au moins trois corps de roulement (3) répartis uniformément sur la périphérie, tandis que les corps de roulement (3) sont disposés dans l'intervalle constitué par cette distance radiale et qu'un corps élastique (4) de forme annulaire, en matériau polymère, est prévu en outre entre la bague intérieure et la bague extérieure (1, 2), caractérisé en ce que le corps élastique (4) est disposé dans l'intervalle et est pourvu de cavités (5) ouvertes dans le sens axial et en ce que les corps de roulement (3) sont pressés dans ces cavités (5) avec élargissement élastique de celles-ci.

2. Amortisseur d'oscillations de rotation selon la revendication 1, caractérisé en ce que le corps élastique (4) est pressé dans l'intervalle après sa fabrication.

3. Amortisseur d'oscillations de rotation selon la revendication 1, caractérisé en ce que le corps élastique (4) est consolidé par vulcanisation et est fixé aux faces opposées l'une à l'autre de la bague intérieure (1) et de la gague extérieure (2).

4. Amortisseur d'oscillations de rotation selon les revendications 1 à 3, caracatérisé en ce que les cavités (5) ont la forme de trous borgnes.

5. Amortisseur d'oscillations de rotation selon les revendications 1 à 4, caractérisé en ce que l'on prévoit des cavités (5) qui débouchent en direction opposée.

6. Amortisseur d'oscillations de rotation selon les revendications 1 à 5, caractérisé en ce que les corps de roulement (3) sont limités intérieurement et extérieurement par des parties d'une surface cylindrique.

7. Amortisseur d'oscillations de rotation selon les revendications 1 à 6, caractérisé en ce que les corps de roulement (3) sont limités, au moins d'un côté, par une surface plane (6) qui présente une disposition parallèle à l'axe et essentiellement radiale.

8. Amortisseur d'oscillations de rotation selon la revendication 6, caractérisé en ce que les corps de roulement sont prévus sous forme de rouleaux essentiellement cylindriques, avec sur les faces opposées de la périphérie, des méplats parallèles (6), tandis que le plan médian (7) parallèle aux méplats (6) et contenant l'axe de rotation du corps de roulement s'étend en direction radiale.

9. Amortisseur d'oscillations de rotation selon les revendications 1 à 8, caractérisé en ce que les corps de roulement (3) sont réalisés en matière plastique dure.

Fig. 1

Fig. 2

Fig. 3